# EUROPEAN PATENT APPLICATION

(11) **EP 4 756 590 A1**
(43) Date of publication of application: **10.06.2026**
(21) Application number: 24848826.4
(22) Date of filing: 08.07.2024
(51) Int. Cl.: G06F 3/04815, G06F 3/01, G06F 3/0346

(54) **INFORMATION PROCESSING DEVICE, INFORMATION PROCESSING METHOD, AND PROGRAM**

(30) Priority: 28.07.2023 JP 2023122947
(71) Applicant: Sony Group Corporation, Tokyo 108-0075 (JP)
(72) Inventor: LIU, Yuhu, Tokyo 108-0075 (JP); YASUDA, Ryouhei, Tokyo 108-0075 (JP)
(74) Representative: MFG Patentanwälte Meyer-Wildhagen Meggle-Freund Gerhard PartG mbB
(86) International application number: PCT/JP2024/024553
(87) International publication number: WO 2025/028167

(57) **Abstract**

The present technology relates to an information processing device, an information processing method, and a program that enable more suitable input operation using a virtual UI.

The information processing device according to the present technology includes a tracking unit that tracks a portion of a body of a user, and a control unit that controls a position and posture of a virtual UI in a three-dimensional space for accepting input operation in at least part of the portion that is being tracked on the basis of a tracking result of the portion. The present technology can be applied to, for example, an HMD that accepts input operation by a user via a virtual keyboard.

## Description

### TECHNICAL FIELD

The present technology relates to an information processing device, an information processing method, and a program, and more particularly, to an information processing device, an information processing method, and a program that enable more suitable input operation using a virtual UI.

### BACKGROUND ART

In recent years, a head mounted display (HMD) equipped with a highly accurate finger recognition function has appeared, and development of a technology of performing input operation of characters, and the like, using a virtual user interface (UI) such as a virtual keyboard has been active. For example, Patent Document 1 discloses a technology of determining a position of a virtual keyboard on the basis of fingertip positions of at least three fingers of a user in an initial state.

### CITATION LIST

### PATENT DOCUMENT

Patent Document 1: WO 2020/039703 A

### SUMMARY OF THE INVENTION

### PROBLEMS TO BE SOLVED BY THE INVENTION

In a case where input operation is performed using a real keyboard, a user grasps a positional relationship between fingers and the keyboard using, for example, a tactile stimulus obtained from keys as a clue, and finely adjusts positions of the fingers. In a case where input operation is performed using a virtual keyboard, a tactile stimulus that becomes a clue cannot be obtained. It is therefore difficult for the user to understand a size of the keyboard and an interval between the keys, and it is difficult to finely adjust the positions of the fingers.

Thus, it has been difficult to perform input operation using a virtual keyboard with accuracy or at a speed equivalent to that in the case of using a real keyboard.

The present technology has been made in view of such circumstances, and enables more suitable input operation using a virtual UI.

### SOLUTIONS TO PROBLEMS

An information processing device according to one aspect of the present technology includes: a tracking unit that tracks a portion of a body of a user; and a control unit that controls a position and posture in a three-dimensional space of a virtual UI for accepting input operation in at least part of the portion that is being tracked on the basis of a tracking result of the portion.

An information processing method according to one aspect of the present technology includes, by an information processing device, tracking a portion of a body of a user, and controlling a position and posture in a three-dimensional space of a virtual UI for accepting input operation in at least part of the portion that is being tracked on the basis of a tracking result of the portion.

A program according to one aspect of the present technology causes a computer to execute processing of tracking a portion of a body of a user and controlling a position and posture in a three-dimensional space of a virtual UI for accepting input operation in at least part of the portion that is being tracked on the basis of a tracking result of the portion.

In one aspect of the present technology, a portion of a body of a user is tracked, and a position and posture in a three-dimensional space of a virtual UI for accepting input operation in at least part of the portion that is being tracked are controlled on the basis of a tracking result of the portion.

### BRIEF DESCRIPTION OF DRAWINGS

Fig. 1 is a view illustrating an HMD according to an embodiment of the present technology.
Fig. 2 is a view illustrating an example of an input posture.
Fig. 3 is a view illustrating an example of a virtual keyboard.
Fig. 4 is a view illustrating an example of a keyboard plane.
Fig. 5 is a view for describing an offset.
Fig. 6 is a view illustrating an example of a second reference plane.
Fig. 7 is a view illustrating an example of a first reference plane, the second reference plane, and the keyboard plane at the input time.
Fig. 8 is a block diagram illustrating a functional configuration example of the HMD.
Fig. 9 is a view illustrating an example of a finger angle.
Fig. 10 is a flowchart for describing processing to be performed by an information processing unit.
Fig. 11 is a flowchart for describing virtual keyboard control processing.
Fig. 12 is a view illustrating an example of the keyboard plane calculated on the basis of an input degree.
Fig. 13 is a view illustrating an example of weighted addition of a position and posture of the keyboard plane at the standby time and a position and posture of the keyboard plane at the input time.
Fig. 14 is a flowchart for describing the virtual keyboard control processing.
Fig. 15 is a block diagram illustrating a configuration example of hardware of a computer.

### MODE FOR CARRYING OUT THE INVENTION

Hereinafter, modes for carrying out the present technology will be described. The description will be given in the following order.
1. Outline of Embodiment
2. Configuration and Operation of HMD
3. Modifications

### <1. Outline of Embodiment>

In recent years, an HMD equipped with a highly accurate finger recognition function has appeared, and development of a technology of performing input operation of characters, and the like, using a virtual keyboard has been active. For example, Patent Document 1 discloses a technology of determining a position of a virtual keyboard on the basis of fingertip positions of at least three fingers of a user in an initial state.

In a case where input operation is performed using a real keyboard, the user grasps a positional relationship between the keyboard and the fingers and finely adjusts the positions of the fingers by using, for example, a tactile stimulus such as a feeling of touching surfaces or edges of keys, a feeling of bottoms of the keys, unevenness that becomes a clue of a home position, or support by a wrist as a clue. In a case where input operation is performed using a virtual keyboard, a tactile stimulus that becomes a clue cannot be obtained. It is therefore difficult for the user to understand a size of the keyboard and an interval between the keys, and it is difficult to finely adjust the positions of the fingers.

Thus, it has been difficult to perform input operation using a virtual keyboard with accuracy or at a speed equivalent to that in the case of using a real keyboard.

An embodiment of the present technology has been conceived focusing on the above point, and proposes a technology capable of more suitably performing input operation using a virtual keyboard. The present embodiment will be described hereinafter in detail.

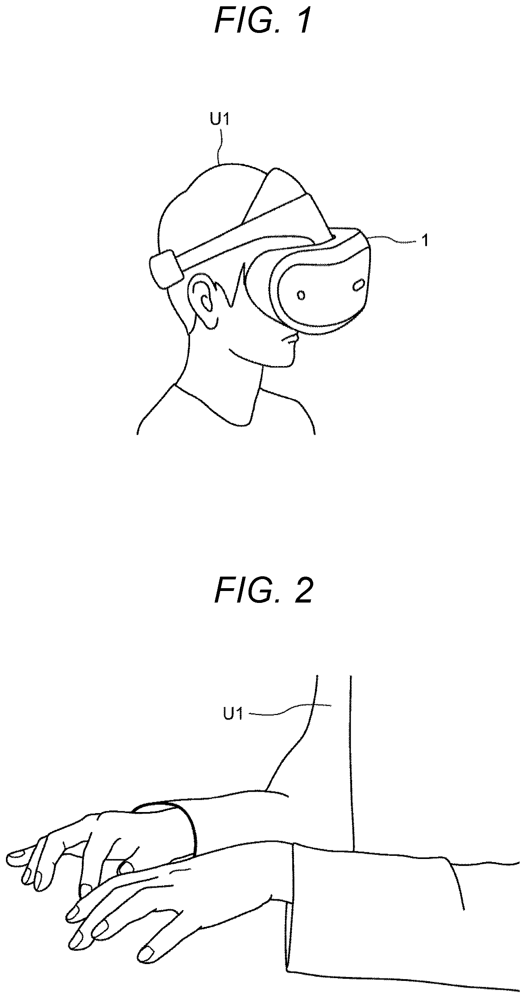

Fig. 1 is a view illustrating an HMD 1 according to an embodiment of the present technology.

As illustrated in Fig. 1, a user U1 wears the HMD 1 on the head.

The HMD 1 is configured as, for example, a display device including a camera and a non-transmissive display. If the user U1 wears the HMD 1, a visual field is blocked by the display and a housing, and thus, the user U1 cannot see an outside world but can see an image displayed on the display.

A game, a movie, Web content, an email, and the like, are displayed on the display of the HMD 1. In order to enable the user U1 to perform input operation of characters, or the like, the HMD 1 accepts an input of operation by the user U1 via a virtual keyboard. The virtual keyboard is a keyboard that does not exist in a real space and is virtually generated, and is, for example, a keyboard in which a plurality of keys is arranged in a QWERTY array. In the present technology, if the user moves the hand, the virtual keyboard moves following the hand of the user.

The HMD 1 tracks each portion of the body of the user U1 using the camera, and calculates a position and posture of the virtual keyboard in a virtual space on the basis of the position (posture) of each portion. The HMD 1 can specify a key pressed by the user U1 on the basis of a position of the finger of the user U1 and the position of the virtual keyboard.

Flow in which the HMD 1 calculates the position and posture of the virtual keyboard will be described with reference to Figs. 2 to 7.

As illustrated in Fig. 2, in a case where a posture of the user U1 is an input posture, the HMD 1 displays the virtual keyboard on the display. The input posture is a posture indicating intention to perform input operation. In Fig. 2, a posture in which both hands are put forward as if the fingers were placed on the keyboard is set as the input posture.

Note that in a case where a gesture other than the gesture of putting both hands forward is performed, it may be determined as the input posture of the user U1. Whether or not the posture of the user U1 is the input posture may be determined by inputting a captured image obtained by capturing a portion of the body of the user U1 to a learning model generated by machine learning, or the like.

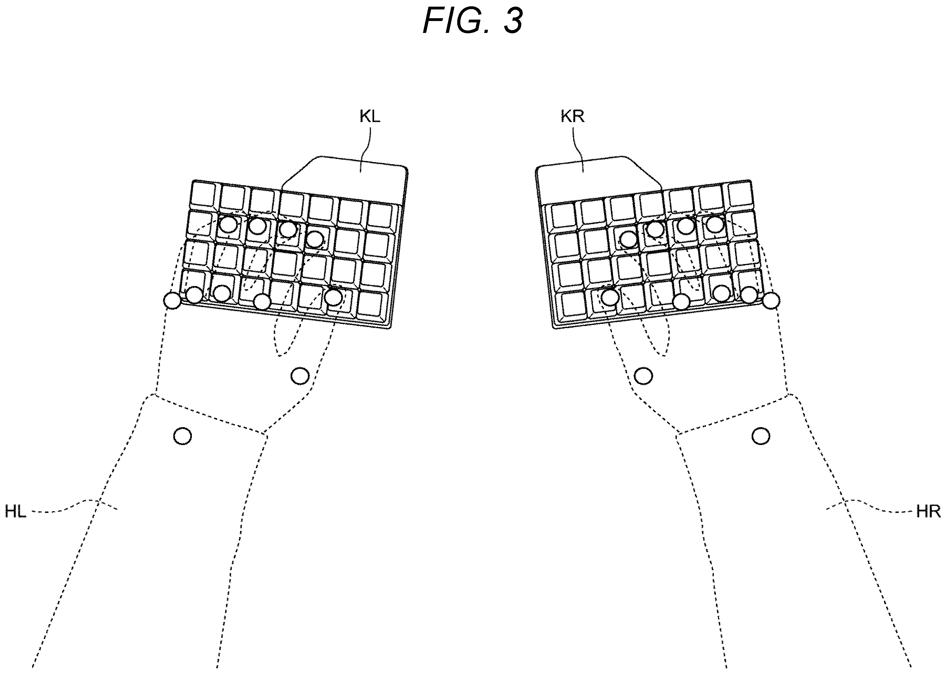

Fig. 3 is a view illustrating an example of the virtual keyboard.

If the user U1 puts both hands forward, as illustrated in Fig. 3, for example, a virtual keyboard KL for left hand is displayed at a position near the left hand HL of the user U1, and a virtual keyboard KR for right hand is displayed at a position near the right hand HR of the user U1. The virtual keyboard KL is operated by the fingertip of each finger which is a portion of the left hand HL, and the virtual keyboard KR is operated by the fingertip of each finger which is a portion of the right hand HR. Furthermore, points indicating the positions of the fingertip, a base, and a wrist of each finger in the left hand HL and the right hand HR are displayed. Note that it is not always necessary to display points indicating the positions of the fingertip, the base, and the wrist of each finger and the virtual keyboards KL, KR.

In Fig. 3, the left hand HL and the right hand HR are indicated by dotted lines, which indicates that the left hand HL and the right hand HR are not displayed on the display of the HMD 1.

In a case where input operation is performed using a real left-right integrated keyboard, the user places the wrist on the keyboard or a tabletop to support the entire hand, or obtains tactile stimulation when the fingertips are placed on the keys, thereby grasping a relative position of the left hand and the right hand. In a case where input operation is performed using a virtual keyboard, it is not possible to obtain clues such as support by the wrist and tactile stimulation of the fingertips. It is therefore preferable to display left-right divided keyboards that do not need to grasp the relative position between the left hand and the right hand as a virtual keyboard.

The input posture includes an input standby state in which the user does not move the fingers and does not perform input operation, and an input state in which the user moves the fingers and performs input operation. Hereinafter, time when the user is in the input standby state will be referred to as standby time, and time when the user is in the input state will be referred to as input time.

At the standby time, the HMD 1 defines a keyboard plane indicating an area in which the virtual keyboard is arranged.

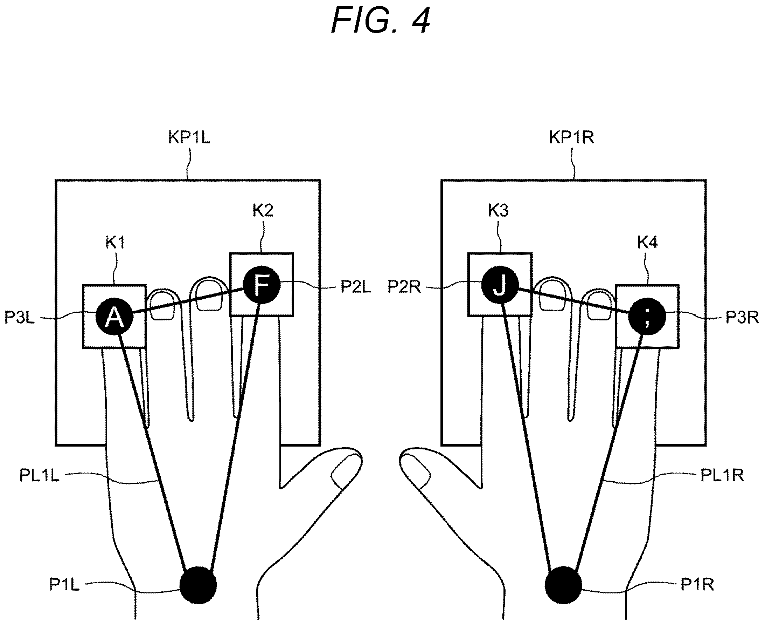

Fig. 4 is a view illustrating an example of the keyboard plane.

As illustrated in Fig. 4, a keyboard plane KP1L for the left hand is defined on the basis of a first reference plane PL1L including a point P1L indicating the position of the wrist, a point P2L indicating the position of the fingertip of the index finger, and a point P3L indicating the position of the fingertip of the little finger of the left hand. Specifically, the keyboard plane KP1L is defined such that the first reference plane PL1L and the keyboard plane KP1L have a predetermined positional relationship. For example, a region of a certain range on a plane obtained by moving the first reference plane PL1L by a predetermined distance and inclining the first reference plane PL1L by a predetermined angle is defined as the keyboard plane KP1L. The keyboard plane KP1L may be defined as a region on the same plane as the first reference plane PL1L.

Note that a plane including a point indicating a position of a portion other than the wrist, the fingertip of the index finger, and the fingertip of the little finger may be set as the first reference plane. In a case where input operation is performed using a real keyboard, it is considered that at least the wrist, the fingertip of the index finger, and the fingertip of the little finger are stably placed on the keyboard or the tabletop at the standby time, and thus, it is preferable to set a plane including three points indicating the positions of the wrist, the fingertip of the index finger, and the fingertip of the little finger as the first reference plane.

On the keyboard plane KP1L, for example, a key K2 of "F" is arranged at the position (point P2L) of the fingertip of the index finger, and a key K1 of "A" is arranged at the position (point P3L) of the fingertip of the little finger. By defining the positions of the keys on the virtual keyboard KL on the basis of the positions of fingertips of the index finger and the little finger at the standby time, it is possible to display the virtual keyboard KL matching the size and shape of the hand of the user. In addition, by enlarging or reducing a size of the keyboard plane KP1L (size of the virtual keyboard KL) or deforming the keyboard plane KP1L (virtual keyboard KL) in accordance with a width between the index finger and the little finger at the standby time, it is possible to display the virtual keyboard KL matching the size and shape of the hand of the user.

Similarly to the left hand, a keyboard plane KP1R for the right hand is defined on the basis of the first reference plane PL1R including a point P1R indicating the position of the wrist, a point P2R indicating the position of the fingertip of the index finger, and a point P3R indicating the position of the fingertip of the little finger of the right hand. On the keyboard plane KP1R, for example, a key K3 of "J" is arranged at the position (point P2R) of the fingertip of the index finger, and a key K4 of ";" is arranged at the position (point P3R) of the fingertip of the little finger.

As described above, at the standby time, the position and posture of the keyboard plane are controlled on the basis of the first reference plane. Specifically, the position and posture of the keyboard plane are controlled to follow the first reference plane.

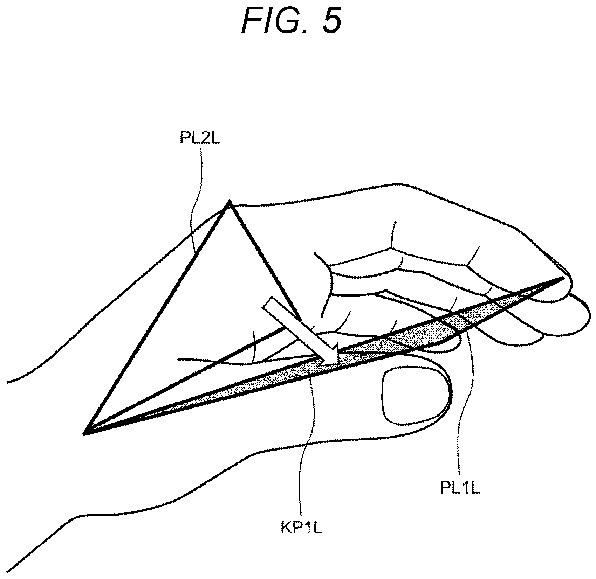

After defining the keyboard plane, the HMD 1 records an offset indicating the positional and postural relationship between a second reference plane PL2L, which is a plane corresponding to the back of the left hand (palm of the left hand), and the keyboard plane KP1L as indicated by an outlined arrow in Fig. 5. The positional and postural relationship between the second reference plane PL2L and the keyboard plane KP1L is expressed by, for example, a relative position (distance) and a relative posture (angle) of the keyboard plane KP1L with respect to the second reference plane PL2L. In Fig. 5, the keyboard plane KP1L is defined as a region on the same plane as the first reference plane PL1L.

The positional and postural relationship indicated by the offset includes a positional and postural relationship between the second reference plane PL2L and the first reference plane PL1L, and a positional and postural relationship between the first reference plane PL1L and the keyboard plane KP1L. Further, the offset also includes information indicating a size of the keyboard plane KP1L and information indicating positions of the keys arranged on the keyboard plane KP1L.

Note that, although not illustrated, an offset indicating the positional and postural relationship between the second reference plane PL2R, which is a plane corresponding to the back of the right hand (palm of the right hand), and the keyboard plane KP1R is also recorded in a similar manner. Even in a case where the virtual keyboard is not displayed, the keyboard plane is defined and the offset is recorded.

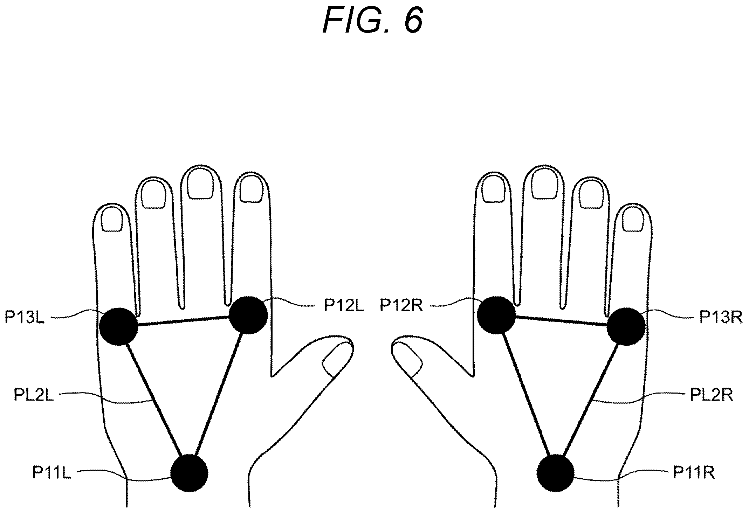

Fig. 6 is a view illustrating an example of the second reference plane.

As illustrated in Fig. 6, the second reference plane PL2L corresponding to the back of the left hand is, for example, a plane including a point P11L indicating the position of the wrist, a point P12L indicating the position of the base of the index finger, and a point P13L indicating the position of the base of the little finger of the left hand. In addition, the second reference plane PL2R corresponding to the back of the right hand is, for example, a plane including a point P11R indicating the position of the wrist, a point P12R indicating the position of the base of the index finger, and a point P13R indicating the position of the base of the little finger of the right hand.

As described above, at the standby time, the position and posture of the keyboard plane are controlled on the basis of the first reference plane, but at the input time, the position and posture of the keyboard plane are controlled on the basis of the second reference plane, not the first reference plane. Specifically, the position and posture of the keyboard plane are controlled to follow the second reference plane.

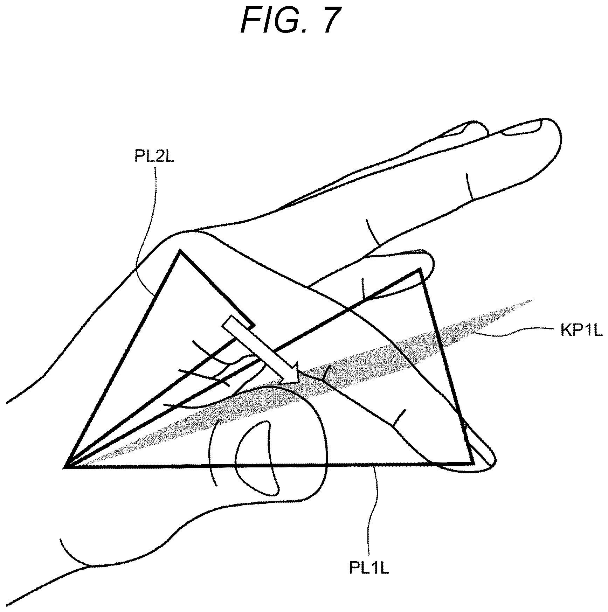

Fig. 7 is a view illustrating an example of the first reference plane, the second reference plane, and the keyboard plane at the input time.

At the input time, the HMD 1 calculates the keyboard plane KP1L so as to reproduce the positional and postural relationship between the second reference plane PL2L and the keyboard plane KP1L indicated by the offset recorded at the standby time as indicated by an outlined arrow in Fig. 7. Specifically, the HMD 1 moves the second reference plane PL2L by a distance indicated by the offset recorded at the standby time, and calculates a region in a predetermined range on a plane tilted by an angle indicated by the offset as the keyboard plane KP1L.

At the input time, the fingertip of each finger moves drastically, and thus, the first reference plane PL1L also changes drastically. If the keyboard plane is controlled to follow the first reference plane PL1L, the keyboard plane also changes drastically. The keyboard plane changes drastically, and thus, it is difficult for the user to accurately press a desired key.

In the HMD 1 of the present technology, the position and posture of the keyboard plane are controlled so as to follow the second reference plane PL2L corresponding to the back of the hand having a small degree of movement even at the input time, so that it is possible to stabilize the keyboard plane. Thus, even if the positions of the fingers change at the input time, the user can accurately press a desired key, and even if the position of the hand changes at the input time, the user can continuously perform the input operation.

### <2. Configuration and Operation of HMD>

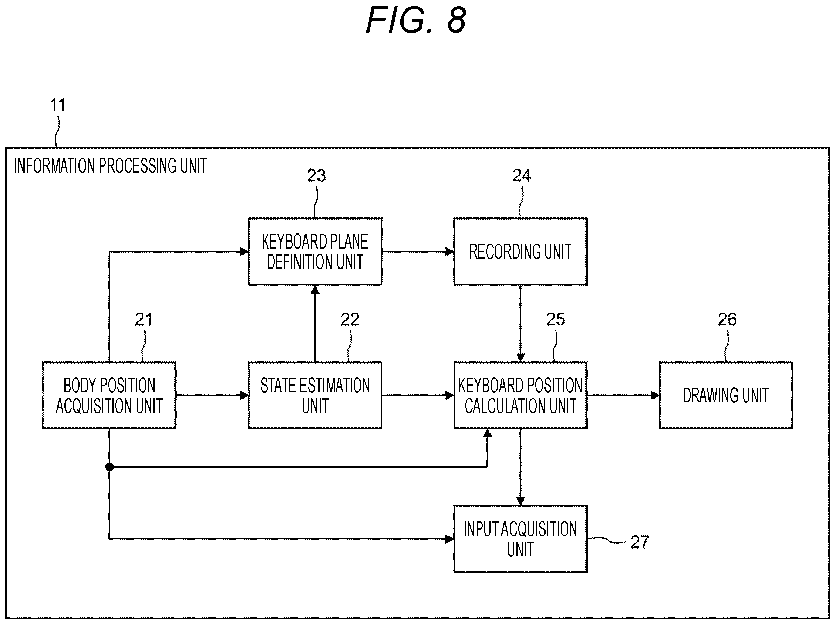

Fig. 8 is a block diagram illustrating a functional configuration example of the HMD 1. An information processing unit 11 in Fig. 8 is implemented, for example, by executing a predetermined program by a CPU, or the like, provided in the HMD 1.

As illustrated in Fig. 8, the information processing unit 11 includes a body position acquisition unit 21, a state estimation unit 22, a keyboard plane definition unit 23, a recording unit 24, a keyboard position calculation unit 25, a drawing unit 26, and an input acquisition unit 27.

The body position acquisition unit 21 functions as a tracking unit that tracks portions of the body of the user on the basis of a captured image captured by a camera provided in the HMD 1, and acquires a position and posture of each portion as a tracking result. The position and posture of each portion of the body are acquired, for example, as parameters of 6 degrees of freedom (6DoF). The body position acquisition unit 21 supplies body information indicating the position and posture of each portion of the body to the state estimation unit 22, the keyboard plane definition unit 23, the keyboard position calculation unit 25, and the input acquisition unit 27.

The state estimation unit 22 estimates a state of the user on the basis of the body information supplied from the body position acquisition unit 21. Specifically, the state estimation unit 22 estimates whether or not the posture of the user is the input posture, whether the user is in the input state or the input standby state, and the like.

For example, the state estimation unit 22 estimates an input degree indicating whether the user is in the input state or the input standby state with a numerical value on the basis of body information. The input degree of 0 indicates that the user is in the input standby state, and the input degree of 1 indicates that the user is in the input state. The input degree is estimated on the basis of an angular velocity and angular acceleration of a finger angle of the finger, a relative position and a relative speed of the fingertip of each finger with respect to the palm, and the like.

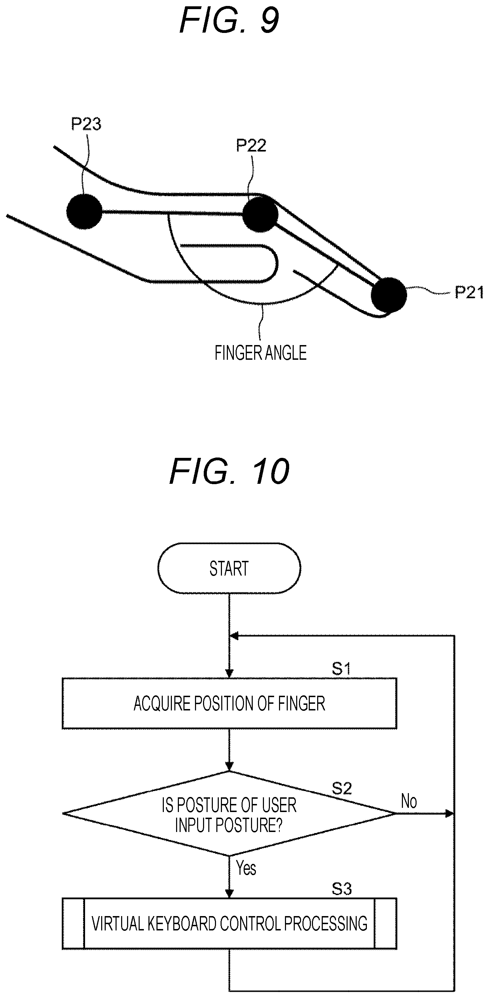

Fig. 9 is a view illustrating an example of the finger angle.

As illustrated in Fig. 9, for example, an angle of a straight line connecting a point P21 indicating the position of the fingertip of the index finger and a point P22 indicating the position of the base and a straight line connecting the point P22 and a point P23 indicating the position of the wrist is defined as the finger angle of the index finger.

For example, in a case where the finger angles of the index finger, the middle finger, the ring finger, and the little finger are substantially the same, the state estimation unit 22 estimates a value of the input degree as 0 (input standby state).

Note that the state estimation unit 22 can also estimate the state of the user by inputting the body information to a learning model generated by machine learning, or the like. It is also possible to instruct whether the user is in the input state or the input standby state by the user performing a gesture. For example, in a case where the user drastically moves the finger or puts the hand forward, the state estimation unit 22 estimates that the user is in the input state. Furthermore, for example, in a case where the posture of the user is a so-called front-following posture in which the hand is vertically extended forward, the state estimation unit 22 estimates that the user is in the standby state, and in a case where the user directs the palm downward in the posture, the state estimation unit 22 estimates that the user is in the input state.

The state estimation unit 22 controls the keyboard plane definition unit 23 and the keyboard position calculation unit 25 on the basis of the estimation result of the state of the user. For example, in a case where the user is in the input standby state, the state estimation unit 22 causes the keyboard plane definition unit 23 to define the keyboard plane. Further, in a case where the user is in the input state, the state estimation unit 22 causes the keyboard position calculation unit 25 to calculate the position and posture of the keyboard plane.

The keyboard plane definition unit 23 defines the keyboard plane on the basis of the body information supplied from the body position acquisition unit 21 and causes the recording unit 24 to record the offset.

The recording unit 24 records the offset supplied from the keyboard plane definition unit 23.

The keyboard position calculation unit 25 acquires the offset from the recording unit 24, and calculates the position and posture of the keyboard plane on the basis of the offset and the body information supplied from the body position acquisition unit 21. The position and posture of the keyboard plane are calculated, for example, as parameters of six degrees of freedom.

The keyboard position calculation unit 25 arranges the keyboard plane having the size indicated by the offset in the calculated position and posture, and arranges various keys at the positions of the keys indicated by the offset on the keyboard plane, thereby generating keyboard data. The keyboard position calculation unit 25 supplies the keyboard data to the drawing unit 26 and the input acquisition unit 27. The keyboard plane definition unit 23 and the keyboard position calculation unit 25 function as a control unit that controls the position and posture of the virtual keyboard.

The drawing unit 26 draws an image such that the virtual keyboard appears to exist at the position of the keyboard plane calculated by the keyboard position calculation unit 25, and displays the image on the display provided in the HMD 1. The drawing unit 26 may change the drawing method of the virtual keyboard on the basis of content of the input operation specified by the input acquisition unit 27. For example, the drawing unit 26 draws an image while changing the color of the key pressed by the finger or draws an image such that the pressed key is sunk into the bottom side of the virtual keyboard.

Note that it is not always necessary to draw and display the virtual keyboard both at the standby time and at the input time. The priority of displaying the virtual keyboard is higher at the input time than at the standby time.

The input acquisition unit 27 specifies the content of the input operation performed by the user on the basis of the body information supplied from the body position acquisition unit 21 and the keyboard data supplied from the keyboard position calculation unit 25. For example, in a case where the position of the key on the virtual keyboard and the position of the fingertip of the user match, the input acquisition unit 27 specifies that the key has been pressed.

Next, processing to be performed by the information processing unit 11 having the configuration as described above will be described with reference to a flowchart of Fig. 10.

In step S1, the body position acquisition unit 21 tracks, for example, a hand as a portion of the body of the user on the basis of the captured image captured by the camera provided in the HMD 1, and acquires the position and posture of the hand.

In step S2, the state estimation unit 22 determines whether or not the posture of the user is the input posture on the basis of the position and posture of the hand of the user.

In a case where it is determined in step S2 that the posture of the user is not the input posture, the processing returns to step S1, and the tracking of the hand is repeated for each frame, for example, until the posture of the user becomes the input posture.

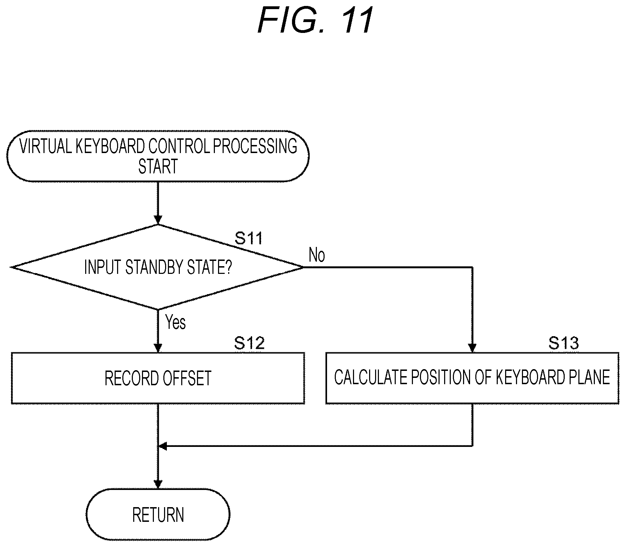

On the other hand, in a case where it is determined in step S2 that the posture of the user is the input posture, the information processing unit 11 performs virtual keyboard control processing in step S3. By the virtual keyboard control processing, the position and posture of the keyboard plane are calculated, and the keyboard data is generated. Details of the virtual keyboard control processing will be described later with reference to Fig. 11.

After the virtual keyboard control processing is performed in step S3, the processing returns to step S1, and the subsequent processing is repeatedly performed.

Next, the virtual keyboard control processing to be performed in step S3 in Fig. 10 will be described with reference to a flowchart in Fig. 11.

In step S11, the state estimation unit 22 determines whether or not the user is in the input standby state.

In a case where it is determined in step S11 that the user is in the input standby state, the keyboard plane definition unit 23 defines the keyboard plane on the basis of the position and posture of the hand of the user and records the offset in step S12. Thereafter, the keyboard position calculation unit 25 generates keyboard data by arranging various keys on the keyboard plane defined by the keyboard plane definition unit 23.

On the other hand, in a case where it is determined in step S11 that the user is not in the input standby state, that is, in the input state, in step S13, the keyboard position calculation unit 25 calculates the position of the keyboard plane on the basis of the offset recorded at the standby time and the position and posture of the hand of the user. Thereafter, the keyboard position calculation unit 25 arranges the keyboard plane in the calculated position and posture, and arranges various keys on the keyboard plane to generate keyboard data.

After the keyboard data is generated in step S12 or step S13, the processing returns to step S3 in Fig. 10, and the subsequent processing is performed.

As described above, in the HMD 1 of the present technology, the hand as a portion of the body of the user is tracked, and the position and posture of the virtual keyboard for accepting input operation with the finger in the three-dimensional space are controlled on the basis of the tracking result of the hand. The virtual keyboard moves so as to follow the hand, and thus, the user can perform input operation using the virtual keyboard with a feeling close to a case of using a real keyboard without worrying about the home position or finely correcting the positions of the fingers.

### <3. Modifications>

### • Example where position and posture of keyboard plane is calculated on the basis of input degree

The final position and posture of the keyboard plane may be calculated by weighted addition of the position and posture of the keyboard plane at the standby time and the position and posture of the keyboard plane at the input time according to the input degree.

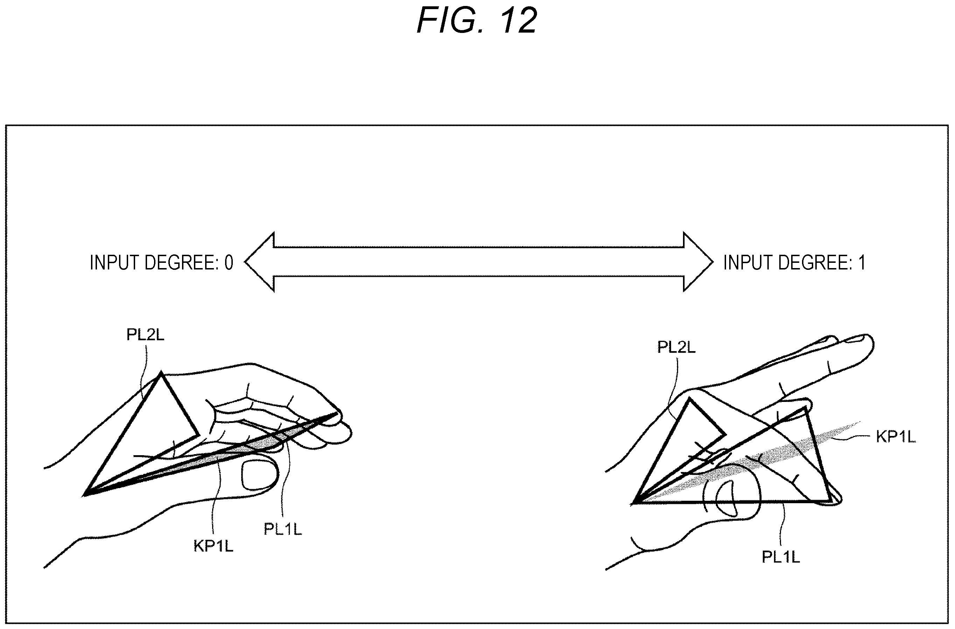

Fig. 12 is a view illustrating an example of the position and posture of the keyboard plane calculated on the basis of the input degree.

As illustrated in a left part of Fig. 12, in a case where a value of the input degree is 0, the user is in the input standby state, and thus, a region of a predetermined range on the same plane as the first reference plane PL1L is calculated as the keyboard plane KP1L. On the other hand, as illustrated on a right part of Fig. 12, in a case where the value of the input degree is 1, the user is in the input state, and thus, a predetermined range on a plane different from the first reference plane PL1L and on which the second reference plane PL2L is moved or tilted is calculated as the keyboard plane KP1L.

In a case where the value of the input degree is, for example, 0.5, a plane obtained by blending the keyboard plane KP1L at the standby time and the keyboard plane KP1L at the input time is calculated as the final keyboard plane. Note that the keyboard plane obtained by blending the keyboard plane at the standby time and the keyboard plane at the input time may be an indeterminate plane having a position and posture not stable even though the keyboard plane does not partially follow the movement of the hand. Thus, the input degree may be set to be estimated discretely between the values of 0 and 1, and for example, the value of the input degree may be set to be 1 even if the fingers slightly move.

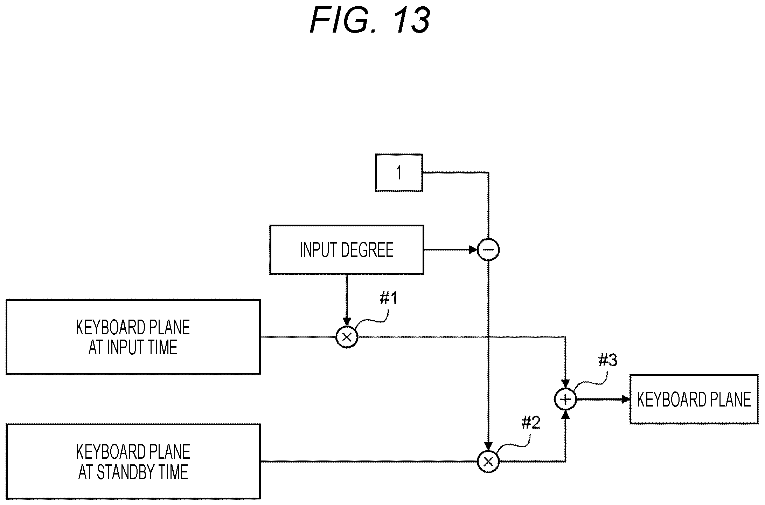

Fig. 13 is a view illustrating an example of weighted addition of the position and posture of the keyboard plane at the standby time and the position and posture of the keyboard plane at the input time.

First, as illustrated in #1 of Fig. 13, the input degree is multiplied as a weight by the position and posture of the keyboard plane at the input time, and as illustrated in #2 of Fig. 13, (1-input degree) is multiplied as a weight by the position and posture of the keyboard plane at the standby time. Next, as illustrated in #3 of Fig. 13, the weighted position and posture of the keyboard plane at the input time and the weighted position and posture of the keyboard plane at the standby time are added to calculate the final position and posture of the keyboard plane.

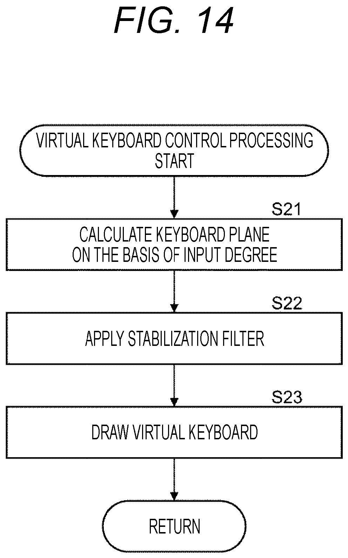

The virtual keyboard control processing in the case of calculating the keyboard position on the basis of the input degree will be described with reference to a flowchart of Fig. 14.

In step S21, the information processing unit 11 calculates the position and posture of the keyboard plane on the basis of the input degree. Specifically, the keyboard plane definition unit 23 defines the keyboard plane at the standby time in advance on the basis of the positions of the fingers of the user. Next, the keyboard position calculation unit 25 calculates the position and posture of the keyboard plane at the input time on the basis of the position and posture of the hand of the user. Finally, as described above, the keyboard position calculation unit 25 performs weighted addition of the position and posture of the keyboard plane at the standby time and the position and posture of the keyboard plane at the input time according to the input degree to calculate the final position and posture of the keyboard plane.

Note that the position and posture of the keyboard plane at the input time herein is a position and posture calculated on the basis of the current second reference plane regardless of whether the user is in the input standby state or the input state.

In step S22, the keyboard position calculation unit 25 applies a stabilization filter based on a time-series change amount of the position and posture, such as a low-pass filter, to the calculated position and posture of the keyboard plane to calculate a position and posture to be reflected in the keyboard data.

In step S23, the drawing unit 26 draws an image such that the virtual keyboard appears to exist on the keyboard plane to which the stabilization filter is applied, and displays the image on the display provided in the HMD 1.

If the position of the keyboard plane is sensitively controlled with respect to the movement of the fingers or the input degree, the keyboard plane may move drastically. It is therefore preferable to apply the stabilization filter to stabilize the keyboard plane and then draw an image of the virtual keyboard as in the processing of steps S22 and S23. Note that the stabilization filter may be applied to the position and posture of each keyboard plane after the position and posture of the keyboard plane at the standby time and the input time are calculated (defined) in step S21.

After the image is displayed on the display in step S23, the processing returns to step S3 in Fig. 10, and the subsequent processing is performed.

As described above, it is also possible to perform weighted addition of the position and posture of the keyboard plane at the standby time and the position and posture of the keyboard plane at the input time according to the input degree.

### • Application example

The present technology can be applied not only to an HMD in which the user cannot see an outside world, but also to an HMD having a video see through (VST) function, augmented reality (AR) glasses, and the like.

### • Example of method for tracking hand and fingers

Instead of tracking the hand and the fingers of the user using the camera provided in the HMD 1, the HMD 1 can track the hand and the fingers of the user using another camera installed at a position where the hand and the fingers of the user can be tracked.

Furthermore, the HMD 1 can also estimate the position and posture of the hand and fingers of the user on the basis of a measurement result of a myoelectric potential by a myoelectric band worn on the wrist of the user. The HMD 1 can also track the hand and the fingers of the user using a glove that is mounted on the hand of the user and equipped with a sensor that senses the posture of the hand and fingers.

### • Modification of virtual keyboard

Instead of a flat surface, a curved surface may be defined as the keyboard plane. It is possible to use a virtual keyboard having a shape and key arrangement designed to match the shape of the hand, such as an ergonomic keyboard. In a case where the home position of the virtual keyboard is different from the home position of the normal keyboard, a flat surface including positions of fingers other than the index finger and the little finger may be used as the first reference plane.

The virtual keyboard may be a keyboard other than the QWERTY keyboard. The virtual keyboard may be, for example, a keyboard in which only numeric keys are arranged. In this case, the home position is such that the fingertip of the middle finger is placed on the "5" key, for example, the keyboard plane may be defined with a flat surface including the positions of the fingertips of the index finger, the middle finger, and the ring finger as the first reference plane.

In addition to the virtual keyboard, the HMD 1 can control the position and posture of a virtual UI which appears in the air and which is to be pressed and operated by a fingertip on the basis of a tracking result of the hand, or the like. The virtual UI includes, for example, a scroll bar or a piano keyboard in addition to the virtual keyboard.

The user can also select and give an instruction of a finger for which a position of the fingertip is to be referred to in order to obtain the first reference plane.

When the user moves his or her hand to simultaneously press the Ctrl, Alt, and del keys, if the virtual keyboard moves following the hand, the user may not be able to press the Ctrl, Alt, and del keys.

Thus, even if the position on the virtual keyboard where the Ctrl key, the Alt key, and the del key are arranged does not match the position of the fingertip of each finger, the input acquisition unit 27 can identify that the user has pressed the Ctrl key, the Alt key, and the del key on the basis of the movement of each finger. For example, the input acquisition unit 27 inputs the body information to a learning model generated by machine learning, or the like, and specifies that the user has pressed the Ctrl key, the Alt key, and the del key.

In a case where the user is looking at the virtual keyboard, the HMD 1 can also control the virtual keyboard so as to be fixed on the spot without following the hand.

An existing method for correcting an input error, such as narrowing down a key that the user intends to press or estimating a word that the user intends to input, on the basis of the type of the finger moved by the user, may be used. In this case, the input acquisition unit 27 can more accurately specify the content of the input operation of the user.

Part or all of the estimation of the state of the user by the state estimation unit 22, the definition of the keyboard plane by the keyboard plane definition unit 23, and the calculation of the position and posture of the keyboard plane by the keyboard position calculation unit 25 may be implemented using a learning model generated by machine learning, or the like.

### • Computer

A series of processing described above can be executed by hardware or can also be executed by software. In a case where a series of processing is executed by software, a program included in the software is installed from a program recording medium on a computer incorporated in dedicated hardware, a general-purpose personal computer, or the like.

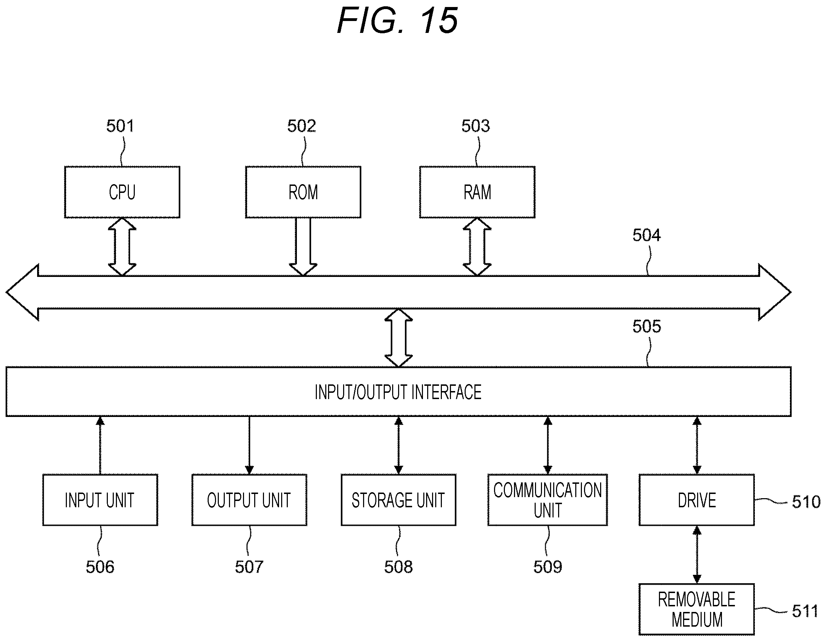

Fig. 15 is a block diagram illustrating a configuration example of hardware of a computer that executes the above-described series of processing in accordance with a program.

A central processing unit (CPU) 501, a read only memory (ROM) 502, and a random access memory (RAM) 503 are connected to each other by a bus 504.

An input/output interface 505 is also connected to the bus 504. An input unit 506 including a keyboard, a mouse, and the like, and an output unit 507 including a display, a speaker, and the like are connected to the input/output interface 505. Furthermore, a storage unit 508 including a hard disk, a nonvolatile memory, or the like, a communication unit 509 including a network interface, or the like, and a drive 510 that drives a removable medium 511 are connected to the input/output interface 505.

In the computer configured as described above, for example, the CPU 501 loads a program stored in the storage unit 508 into the RAM 503 via the input/output interface 505 and the bus 504 and executes the program to execute the above-described series of processing.

For example, the program to be executed by the CPU 501 is stored in the removable medium 511, or provided via a wired or wireless transmission medium such as a local area network, the Internet, or digital broadcasting, and then installed in the storage unit 508.

The program to be executed by the computer may be a program in which the processing is performed in time series in the order described in the present description, or may be a program in which the processing is performed in parallel or at a necessary timing such as when a call is made.

Note that the effects described in the present description are merely examples and are not limited, and other effects may be provided.

Embodiments of the present technology are not limited to the embodiment described above, and various modifications can be made without departing from the scope of the present technology.

For example, the present technology can have a configuration of cloud computing in which one function is shared and processed in cooperation by a plurality of devices via a network.

Furthermore, each step described in the flowchart described above may be executed by a single device, or may be executed by a plurality of devices in a shared manner.

Moreover, in a case where a plurality of kinds of processing is included in one step, the plurality of kinds of processing included in the one step can be executed by one device or executed by a plurality of devices in a shared manner.

### <Examples of Combinations of Configurations>

The present technology can also be configured as follows.
(1) An information processing device including:
   a tracking unit that tracks a portion of a body of a user; and
   a control unit that controls a position and posture in a three-dimensional space of a virtual UI for accepting input operation in at least part of the portion that is being tracked on the basis of a tracking result of the portion.
(2) The information processing device according to (1),
   in which the tracking unit tracks a hand as the portion.
(3) The information processing device according to (2),
   in which the control unit controls the position and posture of the virtual UI on the basis of a first reference plane including a position of a fingertip of a finger in a case where the user is in an input standby state in which the input operation is not being performed.
(4) The information processing device according to (3),
   in which the control unit controls the position and posture of the virtual UI on the basis of a second reference plane corresponding to a back of the hand in a case where the user is in an input state in which the input operation is being performed.
(5) The information processing device according to (4),
   in which the second reference plane is a plane including a position of a base of the finger and a position of a wrist.
(6) The information processing device according to (4) or (5),
   in which the control unit records an offset indicating a positional and postural relationship between the second reference plane and the virtual UI in a case where the user is in the input standby state.
(7) The information processing device according to (6),
   in which the control unit controls the position and posture of the virtual UI so as to reproduce the positional and postural relationship between the second reference plane indicated by the offset and the virtual UI in a case where the user is in the input state.
(8) The information processing device according to any one of (4) to (7),
   in which the control unit controls the position and posture of the virtual UI such that the first reference plane and the virtual UI have a predetermined positional and postural relationship in a case where the user is in the input standby state.
(9) The information processing device according to any one of (4) to (8), further including
   an estimation unit that estimates a state of the user.
(10) The information processing device according to (9),
   in which the estimation unit estimates an input degree indicating the state of the user with a numerical value.
(11) The information processing device according to (10),
   in which the control unit calculates a position and posture to be reflected on the virtual UI by performing weighted addition of a position and posture of the virtual UI based on the first reference plane and a position and posture of the virtual UI based on the second reference plane according to the input degree.
(12) The information processing device according to any one of (2) to (11),
   in which the virtual UI is a virtual keyboard in which a plurality of keys is arranged.
(13) The information processing device according to (12),
   in which the control unit arranges the keys at positions on the virtual keyboard based on a tracking result of a finger in an input standby state in which the user is not performing the input operation.
(14) The information processing device according to any one of (1) to (13),
   in which the control unit calculates a position and posture to be reflected on the virtual UI by applying a filter based on a time-series change amount of the position and posture of the virtual UI.
(15) The information processing device according to any one of (1) to (14),
   in which the control unit controls a size of the virtual UI on the basis of the tracking result of the portion when the user is in an input standby state in which the user is not performing the input operation.
(16) An information processing method including:
   by an information processing device,
   tracking a portion of a body of a user; and
   controlling a position and posture in a three-dimensional space of a virtual UI for accepting input operation in at least part of the portion that is being tracked on the basis of a tracking result of the portion.
(17) A program for causing a computer to execute processing of:
   tracking a portion of a body of a user; and
   controlling a position and posture in a three-dimensional space of a virtual UI for accepting input operation in at least part of the portion that is being tracked on the basis of a tracking result of the portion.

### REFERENCE SIGNS LIST

- 1: HMD
- 11: Information processing unit
- 21: Body position acquisition unit
- 22: State estimation unit
- 23: Keyboard plane definition unit
- 24: Recording unit
- 25: Keyboard position calculation unit
- 26: Drawing unit
- 27: Input acquisition unit

## Claims

1. An information processing device comprising:
a tracking unit that tracks a portion of a body of a user; and
a control unit that controls a position and posture in a three-dimensional space of a virtual UI for accepting input operation in at least part of the portion that is being tracked on a basis of a tracking result of the portion.

2. The information processing device according to claim 1,
wherein the tracking unit tracks a hand as the portion.

3. The information processing device according to claim 2,
wherein the control unit controls the position and posture of the virtual UI on a basis of a first reference plane including a position of a fingertip of a finger in a case where the user is in an input standby state in which the input operation is not being performed.

4. The information processing device according to claim 3,
wherein the control unit controls the position and posture of the virtual UI on a basis of a second reference plane corresponding to a back of the hand in a case that user is in an input state in which the input operation is being performed.

5. The information processing device according to claim 4,
wherein the second reference plane is a plane including a position of a base of the finger and a position of a wrist.

6. The information processing device according to claim 4,
wherein the control unit records an offset indicating a positional and postural relationship between the second reference plane and the virtual UI in a case where the user is in the input standby state.

7. The information processing device according to claim 6,
wherein the control unit controls the position and posture of the virtual UI so as to reproduce the positional and postural relationship between the second reference plane indicated by the offset and the virtual UI in a case where the user is in the input state.

8. The information processing device according to claim 4,
wherein the control unit controls the position and posture of the virtual UI such that the first reference plane and the virtual UI have a predetermined positional and postural relationship in a case where the user is in the input standby state.

9. The information processing device according to claim 4, further comprising
an estimation unit that estimates a state of the user.

10. The information processing device according to claim 9,
wherein the estimation unit estimates an input degree indicating the state of the user with a numerical value.

11. The information processing device according to claim 10,
wherein the control unit calculates a position and posture to be reflected on the virtual UI by performing weighted addition of a position and posture of the virtual UI based on the first reference plane and a position and posture of the virtual UI based on the second reference plane according to the input degree.

12. The information processing device according to claim 2,
wherein the virtual UI is a virtual keyboard in which a plurality of keys is arranged.

13. The information processing device according to claim 12,
wherein the control unit arranges the keys at positions on the virtual keyboard based on a tracking result of a finger in an input standby state in which the user is not performing the input operation.

14. The information processing device according to claim 1,
wherein the control unit calculates a position and posture to be reflected on the virtual UI by applying a filter based on a time-series change amount of the position and posture of the virtual UI.

15. The information processing device according to claim 1,
wherein the control unit controls a size of the virtual UI on a basis of the tracking result of the portion when the user is in an input standby state in which the user is not performing the input operation.

16. An information processing method comprising:
by an information processing device,
tracking a portion of a body of a user; and
controlling a position and posture of a virtual UI in a three-dimensional space for accepting input operation in at least part of the portion that is being tracked on a basis of a tracking result of the portion.

17. A program for causing a computer to execute processing of:
tracking a portion of a body of a user; and
controlling a position and posture in a three-dimensional space of a virtual UI for accepting input operation in at least part of the portion that is being tracked on a basis of a tracking result of the portion.
